# FASCICULE DE BREVET EUROPEEN

(11) **EP 1 913 166 B1**
(45) Date de publication et mention de la délivrance du brevet: **11.05.2011**
(21) Numéro de dépôt: 06794278.9
(22) Date de dépôt: 03.08.2006
(51) Int. Cl.: C22B 7/00, C22C 21/00

(54) **PROCÉDÉ DE RECYCLAGE DE SCRAP D'ALLIAGES DE TYPE ALUMINIUM-LITHIUM**
VERFAHREN ZUR REZYKLIERUNG VON LEGIERUNGEN VOM ALUMINIUM-LITHIUM-TYP ENTHALTENDEN SCHROTT
METHOD FOR RECYCLING SCRAP CONTAINING ALUMINIUM-LITHIUM-TYPE ALLOYS

(30) Priorité: 04.08.2005 FR 0508336
(43) Date de publication de la demande: 23.04.2008
(73) Titulaire: Alcan Rhenalu, 92400 Courbevoie (FR)
(72) Inventeur: RIQUET, Jean-Pierre, F-38000 Grenoble (FR); PELMARD, Philippe, F-38430 Moirans (FR); VERDIER, Jean-François, F-63500 Issoire (FR)
(74) Mandataire: Fénot, Dominique
(86) Numéro de dépôt international: PCT/FR2006/001887
(87) Numéro de publication internationale: WO 2007/015013

(56) Documents cités:
- US-A- 3 873 305
- US-B1- 6 551 424
- PATENT ABSTRACTS OF JAPAN vol. 1998, no. 11, 30 septembre 1998 (1998-09-30) -& JP 10 147822 A (NIPPON RUTSUBO KK), 2 juin 1998 (1998-06-02)
- PATENT ABSTRACTS OF JAPAN vol. 1998, no. 08, 30 juin 1998 (1998-06-30) -& JP 10 068037 A (ALITHIUM:KK), 10 mars 1998 (1998-03-10)

## Description

### Domaine de l'invention

L'invention concerne la fabrication de lingots de refusion en alliages d'aluminium contenant du lithium, à partir de scrap (matières premières pour recyclage, telles que des copeaux ou chutes d'usinage). L'invention concerne particulièrement le recyclage du scrap issu des procédés de fabrication des industries aéronautique et spatiale.

### Etat de la technique

Dans plusieurs industries, les procédés de fabrication de produits métalliques finis par des procédés tels que l'usinage, la transformation, le découpage de produits intermédiaires génèrent des quantités importantes de copeaux et de chutes d'usinage. Dans le présent texte on désigne ces déchets par le terme « scrap » qui est utilisé dans la norme EN 12258-3, intitulée « Aluminium et alliages d'aluminium - Termes et définitions - Partie 3 : Scrap (matières premières pour recyclage) », pour désigner les produits pour recyclage (aluminium). Les industries aéronautiques et spatiales génèrent en particulier une quantité importante de scrap car de nombreuses pièces de structure et composants d'un aéronef sont obtenues par usinage intégral de pièces massives. Cependant le scrap est souvent difficilement recyclable directement en raison du mélange avec d'autres alliages d'aluminium ou d'autres matériaux utilisés en aéronautique tels que les aciers inoxydables et le titane (Wilson et al. Journal de Physique C -75 1987). Les déchets d'usinage des alliages aéronautiques sont ainsi par exemple recyclés dans des alliages aluminium-silicium destinés aux produits moulés. Cette voie de valorisation sera désignée dans la suite du texte par le terme « filière habituelle ». Elle conduit à une perte partielle de la valeur du métal.

Il est également possible de fabriquer des produits en alliages d'aluminium destinés à des applications aéronautiques et spatiales à partir de scrap. Le brevet FR2801060 décrit ainsi la fabrication de produits et demi-produits en alliages de la série 7000 à partir de matières premières pour recyclage tels que des copeaux ou des chutes d'usinage. Ce recyclage est rendu possible par une étape de purification de certaines impuretés. Cette voie de valorisation sera désignée dans la suite du texte par le terme de « filière aéronautique ».

On entend ici par « alliage de type aluminium-lithium » tout alliage contenant une quantité de lithium supérieure à 0,2 % en poids et de préférence supérieure à 0,5 % en poids, quelle que soit la teneur des autres éléments d'alliage. Le point commun de cette famille d'alliage est la nécessité de précautions particulières liées à l'oxydabilité du lithium. Les alliages de type aluminium-lithium (Al-Li) ont une densité plus faible que les alliages d'aluminum traditionnels et sont à ce titre très prometteurs pour réduire le poids des pièces aéronautiques. Cependant, les alliages de type Al-Li sont significativement plus chers que les produits en alliages ne contenant pas de lithium, pour trois raisons : le coût intrinsèque du lithium, le coût de l'élaboration du métal en fonderie, et la difficulté de recycler le scrap. La présente invention concerne le recyclage du scrap des alliages de type Al-Li, et notamment du scrap finement divisé. Ce scrap est généré non seulement lors de la fabrication d'éléments de structure à partir de demi-produits laminés, filés ou forgés, mais déjà dans l'usine d'aluminium même, lors du scalpage des plaques de laminage ou lors de l'écroutage de billettes.

Selon l'état de la technique, seuls les déchets massifs d'alliages de type Al-Li sont recyclés, tels que les plaques de laminage, billettes ou tôles fortes rebutées ou les déchets d'éboutage de tôles fortes. Il existe, en ce qui concerne le scrap finement divisé tel que les copeaux d'usinage en alliage de type Al-Li, un préjugé de l'homme du métier indiquant que le recyclage de ce scrap n'est pas possible dans des quantités industrielles. Ainsi dans la « filière habituelle », la présence de lithium pose de nombreux problèmes, d'abord d'un point de vue pratique lors de la fusion du scrap car le lithium favorise l'oxydation du métal liquide et les conséquences peuvent être notamment le dégagement de fumées, la formation de croûtes épaisses voir la prise en masse du métal, ensuite parce que le lithium est un métal nocif pour de très nombreuses applications d'alliages d'aluminium, telles que l'emballage (où pour certaines applications, la teneur résiduelle en lithium ne doit pas dépasser 0,0001%), ou parce que la teneur maximale admissible de toute impureté est de 0,05% (Robare et Witters, Light Metals 1991, p.1223). De même dans la « filière aéronautique », il est généralement admis (Wilson et al. Journal de Physique C -75 1987) que le recyclage du scrap d'alliages de type Al-Li dans les mêmes alliages n'est pas possible dans les conditions de qualité exigées par les industries qui utilisent ces produits (notamment les industries aéronautique et spatiale).

Dans l'état de la technique , la solution la plus souvent évoquée qui permet de recycler le scrap des alliages de type Al-Li consiste à utiliser un procédé permettant de séparer l'aluminium du lithium (Wilson et al., Rabare et Witters). Ainsi on trouve de nombreuses demandes de brevet concernant la purification de mélanges liquides aluminium-lithium par des méthodes électrolytiques. Des méthodes de ce type sont décrites dans US 4,780,186 (Alcoa), US 4,790,917 (Alcan), US 4,849,072 (Alcoa), US 4,882,017 (Alcoa), US 4,973,390 (Alcoa) et US 5,071,523 (Alcoa). D'autres solutions de type chimique sont proposées. FR 2600343 (Pechiney) propose un procédé de récupération de l'aluminium et du lithium de déchets métalliques par chloration du lithium et récupération du chlorure de lithium formé. De même dans US 4,758,316 (Alcoa) on propose une méthode de refusion et purification du scrap des alliages de type Al-Li, en particulier en formant un sel LiCl par chloration du métal liquide. Le document US 5,032,171 (Alcoa) propose une méthode d'élimination du lithium dans un alliage aluminium-lithium fondu grâce à l'ajout d'un sel de l'acide fluorhydrique et une agitation électromagnétique.

Selon l'état de la technique, une grande partie du scrap finement divisé des alliages de type Al-Li quitte donc le circuit de l'industrie de l'aluminium pour trouver une utilisation finale dans des filières externes, par exemple pour le calmage des aciers. Cela pèse lourdement sur l'économie globale des alliages Al-Li et gène leur développement économique.

Cet effet économique est encore renforcé lorsque les alliages de type Al-Li contiennent d'autres éléments chimiques chers, tels que l'argent, le scandium, les terres rares, et le cuivre. A titre d'exemple, l'alliage AA 2195 contient entre 0,8 et 1,2% de lithium et entre 0,25 et 0,6% d'argent, et l'alliage AA 2098 contient entre 0,8 et 1,3% de Li et entre 0,25 et 0,6% d'argent. D'une manière générale, il est souhaitable d'améliorer le taux de recyclage des alliages de type Al-Li.

L'art antérieur décrit des méthodes de fusion du scrap des alliages d'aluminium d'une manière générale. US 3,999,980 décrit une méthode de fusion de scrap sous atmosphère inerte et la compare à des procédés typiques utilisant un sel fondu. US 4,159,907 montre l'inconvénient de la faible masse volumique du scrap qui a tendance à rester en surface de l'aluminium liquide et à s'oxyder et propose de densifier le scrap par compression pour résoudre ce problème. US6,074,455 décrit une méthode d'immersion rapide du scrap dans l'aluminium liquide grâce à son introduction dans le vortex creé par un rotor. US 3,873,305 décrit une méthode de fusion de scrap de boite boisson dans le quel on force le scrap a être submergé par l'action d'une hélice tournante. JP 10147822 décrit un four utilisé pour la fusion de scrap de boite boisson dans lequel le scrap est mélangé au dessus du bain de métal liquide à l'aide d'un équipement spécifique. La demande de brevet US 2004/0244535 propose d'introduire les déchets d'alliages de type Al-Li sous forme densifiée dans un panier approprié pour obtenir une immersion rapide.

Pour la fusion du scrap, il est donc d'après l'art antérieur préférable de réaliser une immersion rapide ou une protection par une atmosphère inerte ou du sel fondu de façon à éviter l'oxydation du scrap. Pour les alliages de type Al-Li qui sont encore plus sensibles à l'oxydation que les autres alliages d'aluminium, l'homme du métier pensera que les procédés d'immersion rapide ou de protection par une atmosphère inerte ou du sel fondu doivent être encore plus poussés, et ceci d'autant plus qu'on utilise du scrap finement divisé, c'est-à-dire possédant une surface spécifique élevée. C'est ainsi qu'il est mentionné dans la littérature (D. Naser, Material Eng. 103(4) p. 48) que le problème de mélange du scrap d'alliages de type Al-Li pendant la fusion est un problème non résolu et qu'un équipement spécial est nécessaire pour la fusion de ce type de scrap.

Le problème que la présente invention cherche à résoudre est donc de proposer une nouvelle approche de fabrication de lingots de refusion en alliages de type aluminium - lithium permettant d'incorporer une fraction significative de scrap finement divisés.

### Objet de l'invention

L'invention a pour objet un procédé de fusion de scrap en alliage d'aluminium contenant du lithium tel que défini à la revendication 1.

### Description des figures

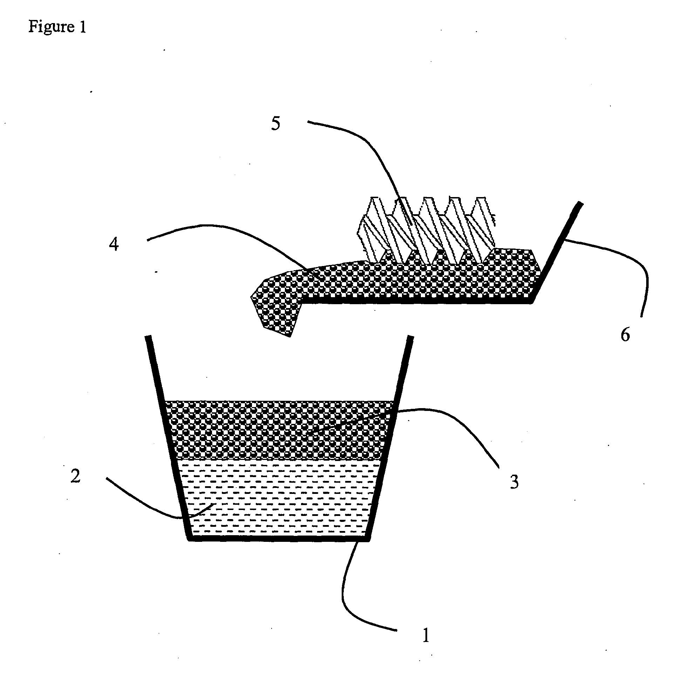

La Figure 1 montre le schéma de principe du fonctionnement du procédé selon l'invention. Le scrap (4) est introduit dans le four (1) à l'aide d'une vis sans fin (5) à partir d'un réservoir (6), et forme à la surface du métal liquide (2) un matelas de scrap (3), qui protège la surface du métal liquide de l'oxydation.

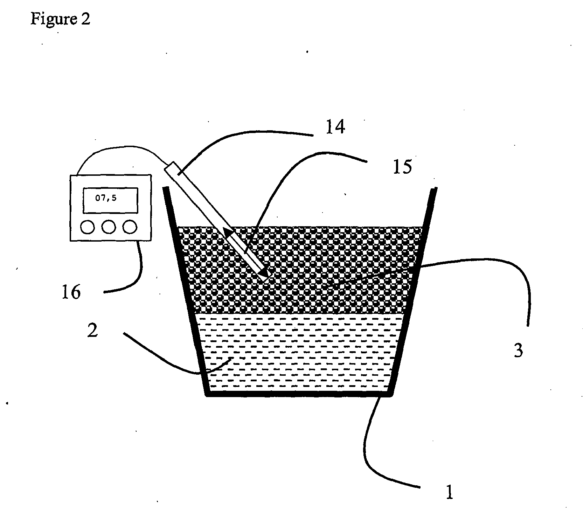

La Figure 2 montre le dispositif utilisé pour mesurer la teneur en oxygène à l'intérieur du matelas de scrap (3). Une cane de prélèvement (14) est introduite à une profondeur (15) dans le matelas de scrap (3), et la composition du gaz prélevé localement est mesurée à l'aide d'un analyseur de gaz (16).

### Description de l'invention

### a) Définitions

Sauf mention contraire, toutes les indications relatives à la composition chimique des alliages sont exprimées en pourcent massique. Par conséquent, dans une expression mathématique, « 0,4 Li » signifie : 0,4 fois la teneur en lithium, exprimée en pourcent massique; cela s'applique mutatis mutandis aux autres éléments chimiques. La désignation des alliages suit les règles de The Aluminum Association, connues de l'homme du métier. La composition chimique d'alliages d'aluminium normalisés est définie par exemple dans la norme EN 573-3.
Sauf mention contraire, les définitions de la norme européenne EN 12258-1 s'appliquent. Les termes liés au scrap et son recyclage sont décrits dans la norme EN12258-3.

Le terme « usinage » comprend tout procédé d'enlèvement de matière tel que le tournage, le fraisage, le perçage, l'alésage, le taraudage, l'électroérosion, la rectification, le polissage.

### b) Description détaillée de l'invention

Le procédé selon l'invention comprend trois grandes étapes : premièrement l'approvisionnement du scrap, deuxièmement la préparation d'un lit initial de métal liquide et le chargement du scrap et troisièmement le prélèvement du métal liquide et la coulée.

### 1/ Approvisionnement du scrap

Le scrap susceptible d'être recyclé par le procédé selon la présente l'invention peut se présenter sous différentes formes, mais comprend préférentiellement du scrap finement divisé, c'est à dire de scrap constitué d'éléments pour lesquels au moins une dimension parmi la longueur, la largeur et l'épaisseur soit inférieure à 1 mm et pour lesquels aucune dimension parmi la longueur, la largeur et l'épaisseur ne soit supérieure à 30 mm. L'une des formes particulièrement préférée est référencée sous le vocable « tournures » dans la norme EN12258-3, ce qui désigne le scrap de production composé de grains, de copeaux, de frisons, produits par usinage ou autres opérations. Le scrap pouvant être recyclé dans le cadre de l'invention peut se présenter dans différents états : principalement scrap en vrac et scrap broyé, le scrap en granules pouvant éventuellement convenir dans les cas ou les pièces le composant sont d'une taille suffisamment petite. Les caractéristiques dimensionnelles du scrap sont importantes pour la réalisation de la présente invention.

Si le scrap est approvisionné sous forme compactée, une étape de décompactage s'avère le plus souvent nécessaire.

Le scrap utilisable dans le cadre de la présente invention est également caractérisé par sa masse volumique. La masse volumique du scrap est mesurée de la façon suivante : un récipient cylindrique d'une capacité de 1 litre est rempli de scrap, une vibration est produite sous la forme de petits chocs de façon à tasser le scrap. L'opération est répétée jusqu'à ce que le récipient soit rempli à raz bord. Le poids du récipient rempli auquel est soustrait le poids du récipient vide permet de déterminer la masse volumique du scrap. Il est préférable que la masse volumique du scrap soit comprise entre 0,05 et préférentiellement 0,1 à 0,7 t/m³ (tonne par mètre cube) et de façon encore plus avantageuse entre 0,2 à 0,4 t/m³.

Il n'est pas nécessaire pour la présente invention que le scrap soit dans l'état de « scrap préparé » ou « scrap propre ». Le « scrap revêtu » et le « scrap anodisé », ne conviennent pas à la présente invention. En revanche, le scrap composé d'éléments plus massifs, appelé « scrap corroyé » et « scrap destiné à une fusion directe » dans la norme EN12258-3 ne sont pas utilisés dans le cadre principal de la présente invention, mais ils peuvent être utilisés avantageusement pour préparer le lit initial de métal liquide nécessaire à la présente invention.

En général, le scrap est recouvert de lubrifiants qui peuvent être des émulsions ou des huiles entières et qui sont généralisés ici par le terme « huile ». La quantité d'huile présente sur le scrap varie en fonction de l'étape de fabrication au cours de laquelle il est généré et de la technologie utilisée pour l'enlèvement du métal. Ainsi la quantité d'huile présente sur le scrap obtenu lors de l'opération de scalpage des plaques de laminage est généralement faible. En revanche, la quantité d'huile présente sur le scrap provenant d'opérations d'usinage est beaucoup plus élevée. Quelle que soit la quantité d'huile présente sur le scrap, la présente invention pourra être utilisée. Une étape préliminaire de déshuilage peut éventuellement s'avérer nécessaire ou au moins utile. Elle peut être effectuée par toutes les méthodes classiques de nettoyage chimique et/ou thermique. Dans le cas d'un dégraissage chimique a l'aide d'un produit aqueux, une étape de séchage est nécessaire. Une méthode avantageuse de dégraissage consiste à utiliser un four cylindrique tournant avec brûleur (type IDEX^{®}), l'atmosphère de ce type de four contient peu d'oxygène pour éviter que les huiles ne s'enflamment. La gestion de la teneur en oxygène est réalisée dans ce type de four à l'aide d'une sonde de mesure et d'une boucle de régulation.

Avantageusement, le scrap susceptible d'être recyclé dans le cadre de la présente invention est essentiellement constitué d'alliages de type aluminium-lithium de préférence convenablement triés. Les alliages qui conviennent sont par exemple le AA2050, AA2090, AA2091, AA2094, AA2095, AA2097, AA2098, AA2099, AA2195, AA2196, AA2197, AA2198, AA2199, AA2297 et AA2397, tels que définis par l'Aluminum Association. L'avantage d'utiliser des déchets triés est d'éviter la contamination du bain de fusion par des éléments, tels que le zinc, n'étant pas contenus dans la plupart desdits alliages et donc de faciliter l'utilisation ultérieure des produits intermédiaires obtenus. Le scrap contenant de l'argent ou du scandium peut être utilisé de façon économiquement avantageuse dans le cadre de la présente invention.

Il est préférable que le scrap qui est utilisé dans le cadre de la présente invention ne soit pas pollué en Fe et en Si par des déchets n'étant pas en alliage d'aluminiumcar cela risque de dégrader certaines propriétés souhaitables du produit qui sera élaboré à partir du métal recyclé. Le procédé selon l'invention peut comprendre une étape destinée à réduire la quantité de déchets ferreux. Toute méthode de tri connue peut être utilisée. La séparation des métaux ferreux est aisée car on peut utiliser le tri magnétique ou le tri par courant de Foucault ; cette dernière méthode convient particulièrement pour la séparation des déchets magnétiques (métaux blancs, inox, ...) et amagnétiques (métaux rouges , cuivre, laiton,...). Ainsi on peut limiter la teneur en Fe du scrap provenant de pièces en alliages ferreux. On peut encore améliorer le tri du scrap à l'aide d'un dispositif basé sur les différences de taille de particule, de masse volumique et/ou de conductivité électrique tel que décrit dans US 5,060,871.

En résumé, l'étape d'approvisionnement peut inclure, le cas échéant en fonction de la définition initiale du scrap, à les actions suivantes :
- sélectionner les alliages qui composent le scrap (tri)
- décompacter le scrap s'il se trouve sous une forme compactée
- sélectionner les dimensions appropriées des morceaux qui composent le scrap (tri)
- enlever d'éventuelles impuretés métalliques ou non métalliques (tri)
- déshuiler

Ces activités peuvent évidemment être remplacées par l'approvisionnement d'un scrap de caractéristiques bien définies.

### 2/ Préparation d'un lit initial de métal liquide et chargement du scrap

L'étape de chargement du scrap consiste à introduire le scrap dans le four. Elle est effectuée de manière continue ou semi-continue. L'étape de chargement est réalisée dans un four de fusion dans lequel on prépare un lit initial de métal liquide d'une première composition sur lequel est déversé le scrap non compacté. Le lit initial de métal liquide est obtenu de façon économiquement préférentielle par la fusion dans un four de fusion de déchets massifs, tels que des chutes de découpe ou des squelettes de découpe de tôles minces ou épaisses, de profilés de plaques, de billettes, lesdits déchets massifs étant constitués d'un alliage de type Al-Li compatible avec le scrap ou d'un alliage ne contenant pas de lithium, et de préférence plus pur, dont la composition ne nuira pas à la composition finale. Le lit initial de métal liquide peut également être obtenu par la fusion de lingots de refusion d'un alliage de type Al-Li compatible avec le scrap ou d'un alliage ne contenant pas de lithium, et de préférence plus pur, dont la composition ne nuira pas à la composition finale. Il est également possible d'obtenir le lit initial de métal liquide par fusion directe de scrap mais cette méthode n'est pas économiquement favorable en raison de la combustion importante de scrap lors de cette opération si elle est réalisée sans précaution particulière. On peut réaliser cette fusion directe de scrap sous une atmosphère inerte appropriée, mais cela augmente le coût d'investissement et le coût d'exploitation du procédé. Dans le cas de coulées successives, le lit initial de métal liquide pourra avantageusement être constitué par le reliquat de la coulée précédente (« pied de bain »). Le lit initial de métal liquide a un poids typiquement inférieur à 300% du poids du scrap à fondre et de préférence inférieur à 150% du poids du scrap à fondre. On préfère que sa température soit sensiblement égale à la température de fusion desdits déchets massifs ou lingots de refusion.

Le scrap est chargé sur le lit de métal liquide par un moyen approprié, par exemple une vis sans fin ou une trémie et un système de vibreur, de façon à créer à la surface du lit de métal liquide un matelas flottant dudit scrap d'une épaisseur contrôlée, ledit matelas fondant partiellement au contact dudit lit de métal liquide de façon à obtenir un bain de métal liquide d'une seconde composition pouvant être égale ou différente de la première composition, la teneur en lithium dudit bain de métal liquide d'une seconde composition étant comprise entre 0,1% et préférentiellement 0,2% à 2,5% en poids.

Ladite épaisseur contrôlée est comprise entre 300 mm et 1500 mm.

La teneur en lithium dans le bain de métal liquide d'une seconde composition qui convient pour le procédé selon la présente invention est comprise entre 0,1% et de préférence 0,2% et 2,5%. On préfère ne pas dépasser 2,5%, car au delà de 2,5% la protection par le matelas flottant n'est plus suffisante ce qui conduit à un moindre rendement en lithium, peut générer des fumées nocives et provoque une dégradation plus rapide des réfractaires du four. Au-dessous de 0,1% ou même de 0,2%, la réactivité du lithium dilué dans le bain d'aluminium est faible, et on n'a pas besoin de protection. Dans une réalisation avantageuse du procédé de l'invention, la teneur en lithium dans le bain de métal liquide d'une seconde composition est comprise entre 0,5% et 2%.

La Figure 1 montre un dispositif constitué d'une vis sans fin (5) permettant d'introduire le scrap (4) sur le lit de métal liquide (2) de façon à former un matelas de copeaux (3). Les caractéristiques dimensionnelles du scrap, sa masse volumique, la température du lit de métal liquide, les caractéristiques du four utilisé, peuvent avoir une influence sur le débit avec lequel le scrap doit être introduit pour obtenir un matelas de l'épaisseur voulue. Le débit de scrap est avantageusement fixé de façon à maintenir l'épaisseur du matelas de scrap entre 300 mm et 1500 mm pendant la majeure partie et avantageusement sensiblement toute l'étape de chargement, le scrap étant progressivement fondu et incorporé au lit de métal liquide. L'étape de chargement peut éventuellement être effectuée de manière continue ou semi-continue.

Les inventeurs ont découvert que, de façon surprenante, le matelas de scrap ainsi constitué à la surface du lit de métal liquide protège ledit lit pendant la fusion d'une manière suffisante évitant ainsi l'oxydation par l'air ambiant et limitant les pertes calorifiques dudit lit. Il est préférable que le matelas de scrap soit quasi-statique c'est à dire qu'il ne soit ni mélangé ni forcé mécaniquement à être incorporé au bain de métal liquide. Une action mécanique sur le matelas de scrap est de préférence à éviter car elle nuit à l'effet protecteur du matelas de scrap. De plus si une action mécanique sur le matelas de scrap est réalisée à l'aide d'outils contenant du fer, il existe un risque de pollution en fer du bain de métal liquide ce qui pourrait nuire aux applications aéronautiques visées. Dans une réalisation avantageuse de l'invention, on n'utilise pas de dispositif mécanique en contact avec le matelas de scrap pendant l'étape de chargement.

Pendant cette étape de chargement, une protection supplémentaire du matelas de scrap et du lit de métal liquide contre l'oxydation, à l'aide, par exemple, d'argon, d'azote ou d'un sel fondu peut être utilisée, elle n'est cependant pas indispensable. Dans le cas ou la teneur en lithium du lit de métal liquide est élevée, par exemple supérieure à 2%, cette protection supplémentaire est avantageuse.

Dans une réalisation avantageuse de l'invention, le four de fusion utilisé est un four à brassage électromagnétique (four à induction).

### 3/ Prélèvement et coulée du métal liquide obtenu

Le bain de métal liquide d'une seconde composition est prélevé dans le four de fusion (étape de prélèvement) par tout moyen approprié tel que, par exemple, le basculement du four, l'aspiration, le déplacement de parois mobiles. Cette étape de prélèvement peut éventuellement être effectuée de manière continue ou semi-continue.

Dans une variante continue de l'invention, on réalise au moins en partie simultanément les étapes de chargement et de prélèvement de métal liquide. Dans ce cas il est nécessaire que le métal liquide soit recouvert en permanence par le matelas flottant de scrap. Dans une réalisation avantageuse de cette variante continue, une protection contre l'oxydation du scrap et du métal liquide par de l'argon, de l'azote ou un sel fondu est utilisée pendant les étapes au moins en partie simultanées de chargement, et de prélèvement de métal liquide.

La coulée du métal liquide prélevé est effectuée pour former un ou plusieurs produits intermédiaires solides tels que des plaques de laminage, billettes de filage, blocs de forge ou lingots de refusion. La coulée sous forme de lingots de refusion (tels que définis dans la norme EN 12258-1) : « bols », « lingots », « barres en T » « sows », « bacs », « gueuses », « pigs » ou tout autre format favorable pour une fusion ultérieure est avantageuse. Aucune mesure particulière d'inertage de la surface du métal liquide en sortie du four pour éviter l'oxydation n'est nécessaire pendant l'étape de prélèvement et pendant la coulée, si le temps d'exposition du métal liquide à l'atmosphère ambiante est suffisamment court.

Le produit intermédiaire obtenu est refroidi et démoulé dans les conditions opératoires habituelles utilisées par l'homme du métier pour ce type d'alliages. Dans une réalisation avantageuse de l'invention, le produit intermédiaire obtenu est un lingot de refusion. Ledit lingot de refusion obtenu a de préférence une teneur en lithium comprise entre 0,1% et préférentiellement 0,2% à 2,5% et de préférence comprise entre 0,2% à 2%.

Les lingots de refusion obtenus par le procédé selon l'invention peuvent être avantageusement utilisés pour la production de produits finis ou semi-finis en alliage de type Al-Li tels que des tôles épaisses, tôles minces, bandes, profilés ou pièces forgées.

Les inventeurs ont par ailleurs observé que quand le scrap contient des métaux précieux, tels que l'argent et/ou le scandium, le rendement de récupération de ces métaux est très favorable.

### 4/ Etape optionnelle de fusion finale du matelas de scrap

Dans un mode de réalisation de l'invention, le matelas de scrap est intégralement fondu, et la température du métal liquide est avantageusement ajustée à l'issue de l'étape de chargement pour permettre le prélèvement de métal liquide (étape de fusion finale du matelas). Dans une réalisation avantageuse de l'invention, l'étape de fusion finale du matelas est réalisée sous une atmosphère protectrice contre l'oxydation ; cette protection est obtenue à l'aide par exemple d'argon liquide ou d'injection d'argon gazeux. Un autre gaz inerte et/ou de l'azote peuvent également être utilisés. Dans une autre réalisation de l'invention, on utilise lors de l'étape de fusion finale du matelas un sel fondu, tel que KCl, LiCl, MgCl₂ ou un mélange de ces sels, auquel on peut éventuellement ajouter AlF₃, la cryolite (AlF₆Na₃), la chiolite (Na₅Al₃F₁₄) ou tout autre sel approprié, da façon à protéger la surface du métal liquide contre l'oxydation. Dans le cas ou la teneur en lithium du bain est élevée, par exemple supérieure à 2%, cette protection pendant l'étape d'ajustement de la température est particulièrement avantageuse.

Le procédé selon l'invention présente des avantages techniques et économiques :
- il ne nécessite pas d'investir dans une installation particulière, notamment à atmosphère inerte,
- il ne nécessite pas ou il minimise l'utilisation de consommables onéreux tels que du gaz inerte,
car la formation d'un matelas de scrap d'épaisseur contrôlée permet de protéger de l'oxydation la surface du métal liquide d'une façon étonnement efficace. Dans le cas où l'alliage contient d'autres métaux précieux tels que l'argent et/ou le scandium, le procédé est particulièrement avantageux du point de vue économique car il permet de récupérer ces métaux précieux dans leur totalité. Ce procédé représente ainsi un progrès significatif par rapport à l'état de la technique pour lequel une immersion rapide du scrap est réalisé et/ou pour lequel un inertage onéreux du scrap d'alliages de type Al-Li est réalisé de façon à limiter l'oxydation du scrap et ses conséquences techniques et économiques.

### c) Exemples

### Exemple 1

2 tonnes de copeaux de scalpage (le « scrap ») en alliage 2098 ont été introduits à l'aide d'une vis sans fin dans un four IDEX^{®} pour y être dégraissés. Ce scrap était caractérisé par une masse volumique de 0,3 t/m³. Un détecteur magnétique a été utilisé en entrée de ce four de façon à éliminer un maximum de pollutions accidentelles magnétiques.

Dans un four à induction (fréquence du courant d'alimentation : 70 Hz) d'une capacité de 6 tonnes, un lit de métal liquide a été préparé à partir de 3 tonnes de déchets massifs en alliage 2098 (pour d'autres essais similaires d'opérations de fusion et de coulée successifs, on a utilisé comme lit de métal liquide le reliquat de la coulée précédente (« pied de bain »)). Ce lit de métal liquide a été porté à une température comprise entre 700 et 780°C. 2 tonnes de scrap ont alors été introduites avec le débit de 6 tonnes/heure. On a obtenu un matelas de scrap d'une épaisseur stationnaire de 800 mm. De l'argon a été introduit pendant cette étape de chargement pour certains essais. Les conditions de l'ensemble des essais sont résumées dans le Tableau 1. Lorsque l'ensemble du scrap a été chargé, une protection de la surface du métal liquide, sous forme de sels ou d'argon a été réalisée lors de certains de ces essais.

Les sels utilisés étaient constitués d'un mélange 50% KCl- 50% LiCl. La température du métal liquide a ensuite été consignée à 730 ou 750°C suivant les essais. La température de consigne ainsi que la température obtenue sont rapportés dans le Tableau 1. Une coulée de 2 tonnes de métal liquide a alors été effectuée, répartie entre deux bols d'une capacité d'une tonne. Des échantillons destinés aux analyses (« pions de coulée ») ont été prélevés après l'étape d'introduction du scrap et au moment de la coulée dans les bols.

**Tableau 1 : Conditions opératoires**

| N° de l'essai | Masse volumique du scrap (t/m³) | Étape de chargement | | | Étape de fusion finale du matelas | | |
|---|---|---|---|---|---|---|---|
| | | Conditions opératoires | Débit de chargement du scrap (tonne/h) | Epaisseur du matelas de scrap (mm) | Conditions opératoires | Température de consigne | Température atteinte |
| 1 | 0,3 | Argon | 6 | 800 | Argon | 730 | Non déterminé |
| 2 | 0,3 | Argon | 6 | 800 | Sel | 730 | 731 |
| 3 | 0,3 | - | 6 | 800 | - | 730 | 697 |
| 4 | 0,3 | - | 6 | 800 | Argon | 750 | 753 |

Les résultats des analyses des pions prélevés au moment de la coulée, obtenues pour les différents essais, sont donnés dans le Tableau 2. Une pollution en manganèse et en zinc provenant d'alliages 2024 et 7075 ayant pollué le scrap en 2098 ont été observées. Une correction numérique liée à ces pollutions a été effectuée pour obtenir le rendement en lithium en déterminant à l'aide des teneurs en zinc et manganèse la quantité de scrap provenant des alliages 2024 et 7075.

**Tableau 2. Résultats analytiques et rendement**

| N° Essai | % Li de la charge (théorique) | % massique mesuré lors de la coulée | | | | % calculé | | | |
|---|---|---|---|---|---|---|---|---|---|
| | | Li | Ag | Mn | Zn | % pollution | Li hors pollution | Ag hors pollution | Rendement Li |
| 1 | 0,94 | 0,86 | 0,31 | 0,06 | 0,003 | 9,3 | 0,95 | 0,34 | 101% |
| 2 | 0,97 | 0,85 | 0,31 | 0,07 | 0,020 | 11,2 | 0,96 | 0,35 | 99% |
| 3 | 0,97 | 0,88 | 0,31 | 0,03 | 0,009 | 2,9 | 0,91 | 0,32 | 94% |
| 4 | 0,94 | 0,88 | 0,32 | 0,03 | 0,030 | 3,9 | 0,91 | 0,33 | 97% |

Contre toute attente, le rendement en lithium est très voisin pour toutes les configurations expérimentales utilisées. Ainsi dans l'essai N°3, pour lequel aucun inertage particulier lors du chargement ou de la montée en température, tel qu'un inertage à l'argon ou au sel, n'a été effectué en complément de l'inertage par le matelas de scrap, le rendement de Li est tout à fait acceptable pour une opération industrielle.

On constate par ailleurs que la récupération de l'argent est bonne (la teneur en Ag initial théorique est de l'ordre de 0,3% en poids). Cela rend le procédé encore plus attractif sur le plan économique.

Afin d'optimiser le rendement économique du procédé, l'écume flottant sur la surfaçe après le démouillage contient du métal en forme métallique qui peut-être récupéré par une opération complémentaire.

### Exemple 2 :

Afin de mieux comprendre l'effet protecteur du matelas de scrap au dessus du métal liquide dans le procédé selon l'invention, on a réalisé des mesures de taux d'oxygène au sein du matelas de scrap à l'aide d'une sonde et d'un appareillage spécialisé. La figure 2 montre schématiquement la méthodologie mise en oeuvre. Une cane de prélèvement de gaz (14) a été introduite dans le matelas de scrap (3) à une profondeur d'enfoncement déterminée (15). La teneur en oxygène a été mesurée à l'aide d'un analyseur de gaz (16) à une durée déterminée après l'enfoncement (t1). Cette durée après enfoncement peut influencer le résultat de la mesure car l'enfoncement de la cane dans le matelas de scrap vient perturber localement la composition de l'atmosphère. Les résultats obtenus sont présentés dans le Tableau 3. On constate qu'un effet sur la teneur en oxygène peut être observé pour un enfoncement de la cane de 50 mm. Pour un enfoncement de 120 cm et une durée après enfoncement de 7 mn on peut atteindre une teneur en oxygène divisée par un facteur supérieur à 3. Ces mesures mettent en évidence l'effet sur la teneur en oxygène locale du matelas de scrap.

**Tableau 3. Résultats des mesures de teneur en oxygène**

| N° de la mesure | poids du pied de bain avant enfournement du scrap (t) | Profondeur d'enfoncement (5) | | | | | | | | | |
|---|---|---|---|---|---|---|---|---|---|---|---|
| | | 120mm | | 100mm | | 60mm | | 50mm | | 30mm | |
| | | Teneur en O₂ | t1 (mn) | Teneur en O₂ | t1 (mn) | Teneur en O₂ | t1 (mn) | Teneur en O₂ | t1 (mn) | Teneur en O₂ | t1 (mn) |
| 1 | 2,5 | 15,3% | 1 | 18,2% | 2 | 18,4% | 4 | 15,0% | 5 | 18,6% | 7 |
| | | 15,9% | 8 | | | | | | | | |
| 2 | 3,5 | 16,3% | 2 | 12,1% | 3 | 17,5% | 4 | 19,5% | 5 | 20,5% | 6 |
| | | 6,5% | 7 | | | | | | | | |

## Revendications

1. Procédé de fusion de scrap en alliage d'aluminium contenant du lithium dans lequel
(i) on approvisionne du scrap contenant des alliages de type aluminium-lithium (étape d'approvisionnement) ;
(ii) on prépare un lit initial de métal liquide d'une première composition (étape de préparation du lit initial de métal liquide) dans un four de fusion ;
(iii) on charge ledit scrap sur ledit lit initial de métal liquide de façon à créer à la surface dudit lit de métal liquide un matelas flottant d'épaisseur contrôlée dudit scrap (étape de chargement), ledit matelas fondant partiellement au contact dudit lit de métal liquide de façon à obtenir un bain de métal liquide d'une seconde composition pouvant être égale ou différente de la première composition, la teneur en lithium dudit bain de métal liquide d'une seconde composition étant comprise entre 0,1% et préférentiellement 0,2% à 2,5% en poids;
(iv) on prélève le métal liquide (étape de prélèvement) dudit bain de métal liquide d'une seconde composition,
dans lequel l'épaisseur contrôlée dudit matelas flottant pendant l'étape de chargement est comprise entre 300 mm et 1500 mm.

2. Procédé continu selon la revendication 1, dans lequel les étapes de chargement et de prélèvement se déroulent au moins en partie simultanément et dans lequel le métal liquide est pendant ces deux étapes en permanence recouvert par ledit matelas de scrap.

3. Procédé selon la revendication 1 ou 2, dans lequel l'étape de chargement est effectuée de manière continue ou semi-continue.

4. Procédé selon une quelconque des revendications 1 à 3 dans lequel l'étape de prélèvement est effectuée de manière continue ou semi-continue.

5. Procédé selon la revendication 1 dans lequel à l'issue de l'étape de chargement on fait fondre intégralement ledit matelas de scrap (étape de fusion finale du matelas).

6. Procédé selon la revendication 5 dans lequel on ajuste la température dudit bain de métal liquide d'une deuxième composition de façon à obtenir une température compatible avec le prélèvement de métal liquide pendant l'étape de prélèvement.

7. Procédé selon une quelconque des revendications 5 à 6 dans lequel le scrap et le métal liquide sont protégés contre l'oxydation pendant l'étape de fusion finale du matelas par de l'argon liquide et/ou de l'argon gazeux et/ou de l'azote.

8. Procédé selon une quelconque des revendications 5 à 7 dans lequel le scrap et le métal liquide sont protégés contre l'oxydation pendant l'étape de fusion finale du matelas par un sel fondu.

9. Procédé selon la revendication 8 dans lequel ledit sel fondu est constitué par un ou plusieurs sels compris dans le groupe formé par KCI, LiCl, MgCl₂, AlF₃, AlF₆Na₃ et Na₅Al₃F₁₄.

10. Procédé selon une quelconque des revendications 1 à 9, dans lequel on coule le métal liquide prélevé pour former un produit intermédiaire solide.

11. Procédé selon une quelconque des revendications 1 à 10 dans lequel la teneur en lithium dudit bain de métal liquide d'une seconde composition est comprise entre 0,5% et 2% en poids.

12. Procédé selon une quelconque des revendications 1 à 11 dans lequel le matelas de scrap et le lit de métal liquide sont protégés contre l'oxydation pendant l'étape de chargement par de l'argon et/ou de l'azote et/ou un sel fondu.

13. Procédé selon une quelconque des revendications 1 à 12 dans lequel le scrap est constitué de tournures telles que des grains, des copeaux, des frisons produits par usinage ou autres opérations.

14. Procédé selon une quelconque des revendications 1 à 13 dans lequel le scrap comprend des éléments pour lesquels au moins une dimension parmi la longueur, la largeur et l'épaisseur est inférieure à 1 mm et pour lesquels aucune dimension parmi la longueur, la largeur et l'épaisseur n'est supérieure à 30 mm.

15. Procédé selon une quelconque des revendications 1 à 14 dans lequel la masse volumique du scrap est comprise entre 0,05 et préférentiellement 0,1 à 0,7 t/m³

16. Procédé selon la revendication 15 dans lequel la masse volumique du scrap est comprise entre 0,2 à 0,4 t/m³

17. Procédé selon une quelconque des revendications 1 à 16 dans lequel le scrap est essentiellement constitué par un ou plusieurs alliages sélectionnés dans le groupe formé par les alliages AA2050, AA2090, AA2091, AA2094, AA2095, AA2097, AA2098, AA2099, AA2195, AA2196, AA2197, AA2198, AA2199, AA2297 et AA2397.

18. Procédé selon une quelconque des revendications 1 à 17, dans lequel le scrap contient de l'argent ou du scandium.

19. Procédé selon une quelconque des revendications 1 à 18 dans lequel un déshuilage du scrap est effectué pendant l'étape d'approvisionnement.

20. Procédé selon la revendication 19 dans laquelle ledit déshuilage est effectué à l'aide d'un four cylindrique tournant avec brûleur.

21. Procédé selon une quelconque des revendications 1 à 20 dans lequel le lit initial de métal liquide a un poids inférieur à 300% du poids de scrap chargé.

22. Procédé selon la revendication 21 dans lequel le lit initial de métal liquide a un poids inférieur à 150% du poids de scrap chargé.

23. Procédé selon une quelconque des revendications 1 à 22 dans lequel le four de fusion est un four à induction.

24. Procédé selon une quelconque des revendications 10 à 23 dans lequel le produit intermédiaire est un lingot de refusion.

25. Procédé selon une quelconque des revendications 1 à 24 dans lequel ledit matelas de scrap est quasi-statique.

26. Procédé selon la revendication 10 dans lequel le produit intermédiaire obtenu est utilisé pour la production de produits finis ou semi-finis en alliage de type Al-Li tels que des tôles épaisses, tôles minces, bandes, profilés ou pièces forgées.

## Claims

1. A method for melting scrap of an aluminium alloy containing lithium, wherein:
(i) scrap containing aluminium-lithium-type alloys is provided (supply step);
(ii) an initial liquid metal bed of a first composition is prepared (step of preparing the initial liquid metal bed) in a smelting oven;
(iii) said scrap is loaded onto said initial liquid metal bed so as to create, at the surface of said liquid metal bed, a floating layer of said scrap with a controlled thickness (loading step); said floating layer being partially melted by contact with the metal bed so as to obtain a liquid metal bath having a second composition, which can be the same as or different from the first composition, the lithium content of said metal bath having a second composition being comprised between 0.1 wt.%, and preferably 0.2 wt.% to 2.5 wt.%;
(iv) the liquid metal is removed (removal step) from said liquid metal bath of a second composition,
wherein the controlled thickness of said floating layer during the loading step is between 300 mm and 1500 mm.

2. A continuous method according to claim 1, wherein the loading and removal steps are performed at least partially simultaneously, and wherein the liquid metal is, during these two steps, constantly covered by said floating layer.

3. A method according to claim 2 wherein the loading step is performed continuously or semi-continuously.

4. A method according to any one of claims 1 to 3, wherein the removal step is performed continuously or semi-continuously.

5. A method according to claim 1, wherein after the loading step is completed, said floating layer is substantially totally melted (step of final melting of the floating layer).

6. A method according to claim 5, wherein the temperature of said liquid metal bath of a second composition is adjusted so as to obtain a temperature compatible with the removal of liquid metal during the removal step.

7. A method according to any one of claims 5 or 6, wherein the scrap and the liquid metal are protected against oxidation by liquid argon and/or gaseous argon and/or nitrogen during the step of final melting of the floating layer.

8. A method according to any one of claim 5 to 7, wherein the scrap and the liquid metal are protected against oxidation by a molten salt during the step of final melting of the floating layer.

9. A method according to claim 8, wherein said molten salt is constituted by one or more of the salts included in the group consisting of KCI, LiCl, MgCl₂, AlF₃, AlF₆Na₃ and Na₅Al₃F₁₄.

10. A method according to any one of claims claim 1 to 9, wherein the liquid metal removed is cast so as to form a solid intermediate product.

11. A method according to any one of claims 1 to 10, wherein the lithium content of said liquid metal bath of a second composition is between 0.5 % and 2 % by weight.

12. A method according to any one of claim 1 to 11, wherein the floating layer and the liquid metal bath are protected against oxidation during the loading step by argon and/or nitrogen and/or a molten salt.

13. A method according to claim any one of claims 1 to 12, wherein the scrap is constituted by turnings such as grains, chips or wool produced by machining or other operations.

14. A method according to any one of claim 1 to 13, wherein the scrap comprises elements of which at least one dimension among length, width and thickness is less than 1 mm and of which no dimension among length, width and thickness is greater than 30 mm.

15. A method according to any one of claim 1 to 14, wherein the density of the scrap is between 0,05 and preferentially 0.1 to 0.7 t/m³.

16. A method according to claim 15, wherein the density of the scrap is between 0.2 to 0.4 t/m³.

17. A method according to any one of claim 1 to 16, wherein the scrap consists essentially of one or more alloys selected from the group consisting of AA2050, AA2090, AA2091, AA2094, AA2095, AA2097, AA2098, AA2099, AA2195, AA2196, AA2197, AA2198, AA2199, AA2297 and AA2397.

18. A method according to any one of claim 1 to 17, wherein the scrap contains silver or scandium.

19. A method according to any one of claim 1 to 18, wherein the scrap is de-oiled during the supply step.

20. A method according to claim 19, wherein said de-oiling is performed using a rotating cylindrical oven with a burner.

21. A method according to any one of claim 1 to 20, wherein said initial liquid metal bed has a weight of less than 300 % of the weight of the loaded scrap.

22. A method according to claim 21, wherein the initial liquid metal bed has a weight of less than 150 % of the weight of the loaded scrap.

23. A method according to any one of claim 1 to 22, wherein the smelting oven is an induction furnace.

24. A method according to any one of claim 10 to 23, wherein the solid intermediate product is a remelting ingot.

25. A method according to any one of claims 1 to 24, wherein said floating layer is quasi-static.

26. A method according to claim 10 wherein the intermediate product obtained is used for the production of finished or semi-finished products in an Al-Li type alloy such as thick plates, thin plates, strips, profiles or forged parts.

## Patentansprüche

1. Verfahren zum Einschmelzen von Schrott aus lithiumhaltiger Aluminiumlegierung, bei dem
(i) Schrott bereitgestellt wird, der Legierungen vom Typ Aluminium-Lithium enthält (Bereitstellungsschritt);
(ii) ein Ausgangsbett aus Flüssigmetall mit einer ersten Zusammensetzung in einem Schmelzofen hergestellt wird (Herstellungsschritt des Ausgangsbettes aus Flüssigmetall);
(iii) der Schrott so auf das Ausgangsbett aus Flüssigmetall chargiert wird, dass an der Oberfläche des Flüssigmetallbettes eine schwimmende Schicht aus Schrott mit kontrollierter Dicke erzeugt wird (Chargierschritt), welche Schicht im Kontakt mit dem Flüssigmetallbett teilweise schmilzt, so dass ein Flüssigmetallbett mit einer zweiten Zusammensetzung entsteht, die gleich der ersten Zusammensetzung oder davon verschieden sein kann, wobei der Lithiumgehalt des Flüssigmetallbettes mit einer zweiten Zusammensetzung im Bereich zwischen 0,1 und vorzugsweise 0,2 bis 2,5 Gew.-% liegt;
(iv) das Flüssigmetall aus dem Flüssigmetallbett mit einer zweiten Zusammensetzung entnommen wird (Entnahmeschritt),
wobei die kontrollierte Dicke der schwimmenden Schicht während des Chargierschrittes im Bereich zwischen 300 mm und 1500 mm liegt.

2. Kontinuierliches Verfahren nach Anspruch 1, bei dem der Chargierschritt und der Entnahmeschritt zumindest zum Teil simultan ablaufen und das Flüssigmetall während dieser beiden Schritte permanent mit der Schrottschicht bedeckt ist.

3. Verfahren nach Anspruch 1 oder 2, bei dem der Chargierschritt kontinuierlich oder halbkontinuierlich durchgeführt wird.

4. Verfahren nach irgendeinem der Ansprüche 1 bis 3, bei dem der Entnahmeschritt kontinuierlich oder halbkontinuierlich durchgeführt wird.

5. Verfahren nach Anspruch 1, bei dem die Schrottschicht am Ende des Chargierschrittes vollständig eingeschmolzen wird (abschließendes Einschmelzen der Schrottschicht).

6. Verfahren nach Anspruch 5, bei dem die Temperatur des Flüssigmetallbettes mit einer zweiten Zusammensetzung so eingestellt wird, dass sich eine Temperatur ergibt, die mit der Flüssigmetallentnahme während des Entnahmeschrittes kompatibel ist.

7. Verfahren nach irgendeinem der Ansprüche 5 bis 6, bei dem der Schrott und das Flüssigmetall während des abschließenden Einschmelzens der Schrottschicht mit flüssigem Argon und/oder gasförmigem Argon und/oder Stickstoff gegen Oxidation geschützt werden.

8. Verfahren nach irgendeinem der Ansprüche 5 bis 7, bei dem der Schrott und das Flüssigmetall während des abschließenden Einschmelzens der Schrottschicht mit einer Salzschmelze gegen Oxidation geschützt werden.

9. Verfahren nach Anspruch 8, bei dem die Salzschmelze aus einem oder mehreren Salzen besteht, die in der Gruppe bestehend aus KCI, LiCI, MgCI₂, AlF₃, AlF₆Na₃ und Na₅Al₃F₁₄ enthalten sind.

10. Verfahren nach irgendeinem der Ansprüche 1 bis 9, bei dem das entnommene Flüssigmetall zu einem festen Zwischenerzeugnis vergossen wird.

11. Verfahren nach irgendeinem der Ansprüche 1 bis 10, bei dem der Lithiumgehalt des Flüssigmetallbettes mit einer zweiten Zusammensetzung im Bereich zwischen 0,5 und 2 Gew.-% liegt.

12. Verfahren nach irgendeinem der Ansprüche 1 bis 11, bei dem die Schrottschicht und das Flüssigmetallbett während des Chargierschrittes mit Argon und/oder Stickstoff und/oder einer Salzschmelze gegen Oxidation geschützt werden.

13. Verfahren nach irgendeinem der Ansprüche 1 bis 12, bei dem der Schrott aus Drehspänen wie Körner, Hobelspäne, Frässpäne besteht, die bei Bearbeitungs- oder anderen Vorgängen anfallen.

14. Verfahren nach irgendeinem der Ansprüche 1 bis 13, bei dem der Schrott Teile enthält, bei denen mindestens eine Abmessung unter Länge, Breite und Dicke kleiner als 1 mm ist und bei denen keine Abmessung unter Länge, Breite und Dicke größer als 30 mm ist.

15. Verfahren nach irgendeinem der Ansprüche 1 bis 14, bei dem die Dichte des Schrottes im Bereich zwischen 0,05 und vorzugsweise 0,1 bis 0,7 t/m³ liegt.

16. Verfahren nach Anspruch 15, bei dem die Dichte des Schrottes im Bereich zwischen 0,2 und 0,4 t/m³ liegt.

17. Verfahren nach irgendeinem der Ansprüche 1 bis 16, bei dem der Schrott im Wesentlichen aus einer oder mehreren Legierungen besteht, ausgewählt aus der Gruppe bestehend aus den Legierungen AA2050, AA2090, AA2091, AA2094, AA2095, AA2097, AA2098, AA2099, AA2195, AA2196, AA2197, AA2198, AA2199, AA2297 und AA2397.

18. Verfahren nach irgendeinem der Ansprüche 1 bis 17, bei dem der Schrott Silber oder Scandium enthält.

19. Verfahren nach irgendeinem der Ansprüche 1 bis 18, bei dem eine Entölung des Schrottes während des Bereitstellungsschrittes durchgeführt wird.

20. Verfahren nach Anspruch 19, bei dem die Entölung mittels eines zylindrischen Drehofens mit Brenner durchgeführt wird.

21. Verfahren nach irgendeinem der Ansprüche 1 bis 20, bei dem das Ausgangsbett aus Flüssigmetall ein Gewicht hat, das weniger als 300 % des chargierten Schrottgewichtes beträgt.

22. Verfahren nach Anspruch 21, bei dem das Ausgangsbett aus Flüssigmetall ein Gewicht hat, das weniger als 150 % des chargierten Schrottgewichts beträgt.

23. Verfahren nach irgendeinem der Ansprüche 1 bis 22, bei dem der Schmelzofen ein Induktionsofen ist.

24. Verfahren nach irgendeinem der Ansprüche 10 bis 23, bei dem das Zwischenerzeugnis eine Massel ist.

25. Verfahren nach irgendeinem der Ansprüche 1 bis 24, bei dem die Schrottschicht quasistatisch ist.

26. Verfahren nach Anspruch 10, bei dem das gewonnene Zwischenerzeugnis für die Herstellung von Fertigprodukten oder Halbzeugen aus einer Legierung vom Typ Al-Li eingesetzt wird, wie zum Beispiel dünne Bleche, dicke Bleche, Bänder, Profile oder Schmiedestücke.
